# EUROPEAN PATENT APPLICATION

(11) **EP 2 540 205 A2**
(43) Date of publication of application: **02.01.2013**
(21) Application number: 12173593.0
(22) Date of filing: 26.06.2012
(51) Int. Cl.: A47L 9/00

(54) **Step climbing device for moving robots, step climbing system for moving robots and step climbing method of moving robot**

(30) Priority: 28.06.2011 KR 20110062726
(71) Applicant: Samsung Electronics Co., Ltd., Suwon-si, Gyeonggi-do, 443-742 (KR)
(72) Inventor: Kim, Dong Won, Gyeonggi-do (KR); Jang, Hwi Chan, Gyeonggi-do (KR); Lee, Jun Hwa, Gyeonggi-do (KR); Jung, Hyun Soo, Gyeonggi-do (KR)
(74) Representative: Grünecker, Kinkeldey, Stockmair & Schwanhäusser

(57) **Abstract**

A step climbing device for moving robots including a climbing guide provided with an inclined surface formed on the upper surface thereof so as to allow a moving robot to climb a step through the inclined surface of the climbing guide.

## Description

### BACKGROUND

### 1. Field

Example embodiments of the following disclosure relate to a step climbing device, system, and method for moving robots which allows a moving robot to climb a step, and more particularly, to a device, system, and method for moving a robot including a climbing guide provided with an inclined surface formed on the upper surface thereof so as to allow a moving robot to climb a step through the inclined surface of the climbing guide.

### 2. Description of the Related Art

Recently, moving robots, such as cleaning robots which clean an indoor space while moving along the bottom surface, have been widely used.

A moving robot used as a cleaning robot indoors includes a main body and a pair of wheels disposed on the lower portion of the main body to allow the moving robot to move. However, such a moving robot does not climb a stepped region between two bottom surfaces having different heights in an indoor space, and as such, the robot may fall from one bottom surface to another, thereby causing damage. Therefore, a user needs to lift directly the moving robot from the stepped region to move the moving robot to a different bottom surface.

### SUMMARY

Therefore, it is an aspect of the present disclosure to provide a step climbing device for moving robots and a step climbing system for moving robots which allow a moving robot to climb a step formed between two bottom surfaces having different heights.

Additional aspects of the disclosure will be set forth in part in the description which follows and, in part, will be obvious from the description, or may be learned by practice of the disclosure.

In accordance with one aspect of the present disclosure, a step climbing device for moving robots which is disposed at a step formed between a first bottom surface and a second bottom surface located at different heights, includes a climbing guide including an inclined surface formed on the upper surface thereof and allowing a moving robot to climb the step to move from one of the first bottom surface and the second bottom surface to the other one of the first bottom surface and the second bottom surface.

Rail parts may be provided on the inclined surface at positions corresponding to moving paths of wheels of the moving robot moving along the climbing guide so as to reduce slippage of the wheels of the moving robot on the inclined surface.

The rail parts may include prominences and depressions.

The step climbing device may further include height adjustment units connected to the upper end of the climbing guide to adjust the height of the upper end of the climbing guide corresponding to the step.

Each of the height adjustment units may include a screw extending vertically and connected to the upper end of the climbing guide and a leg rotatably installed at the lower end of the screw and moving vertically.

The step climbing device may further include a first extension plate rotatably installed at the upper end of the climbing guide, and a second extension plate rotatably installed at the lower end of the climbing guide.

The first extension plate and the second extension plate may be formed of an elastically deformable material.

The step climbing device may further include guide units generating a signal to guide the moving robot.

The guide units may include a first guide unit disposed at the lower end of the climbing guide and a second guide unit disposed at the upper end of the climbing guide.

The step climbing device may further include two guide ribs provided at both sides of the inclined surface to guide the moving robot along the inclined surface.

The step climbing device may further include a charging terminal connected to a charging unit provided on the moving robot to charge the moving robot.

The charging terminal may protrude from the inclined surface and be connected to the charging unit under the condition that the moving robot is located on the inclined surface.

The step climbing device may further include a fixing protrusion disposed on the inclined surface to fix a support protrusion protruding from the moving robot under the condition that the charging terminal is connected to the charging unit.

The fixing protrusion may selectively protrude from the inclined surface.

The charging terminal may be connected to the charging unit of the moving robot under the condition that the moving robot is located on one of the first bottom surface and the second bottom surface.

In accordance with another aspect of the present disclosure, a step climbing system for moving robots includes a moving robot and a step climbing device for moving robots disposed at a step formed between a first bottom surface and a second bottom surface located at different heights and allowing the moving robot to climb the step, wherein the step climbing device includes a first communication unit for communication with the moving robot, and the moving robot includes a second communication unit for communication with the first communication unit.

In accordance with a further aspect of the present disclosure, a step climbing method of a moving robot includes causing the moving robot to clean a first bottom surface while moving along the first bottom surface, confirming the position of a step climbing device for moving robots after cleaning of the first bottom surface has been completed, causing the moving robot to climb a step through the step climbing device for moving robots to move to a second bottom surface, and causing the moving robot to clean the second bottom surface while moving along the second bottom surface.

### BRIEF DESCRIPTION OF THE DRAWINGS

These and/or other aspects of the disclosure will become apparent and more readily appreciated from the following description of the embodiments, taken in conjunction with the accompanying drawings of which:
FIG. 1 is a perspective view schematically illustrating movement of a moving robot through a step climbing device for moving robots in accordance with an example embodiment of the present disclosure;
FIG. 2 is a perspective view of the step climbing device for moving robots in accordance with an example embodiment;
FIG. 3 is a perspective view of a step climbing device for moving robots in accordance with another example embodiment; and
FIG. 4 is a perspective view of a step climbing device for moving robots in accordance with a further example embodiment.

### DETAILED DESCRIPTION

Reference will now be made in detail to the embodiments of the present disclosure, examples of which are illustrated in the accompanying drawings, wherein like reference numerals refer to like elements throughout.

Hereinafter, a step climbing device for moving robots and a step climbing system for moving robots in accordance with an embodiment of the present disclosure will be described in detail with reference to the accompanying drawings.

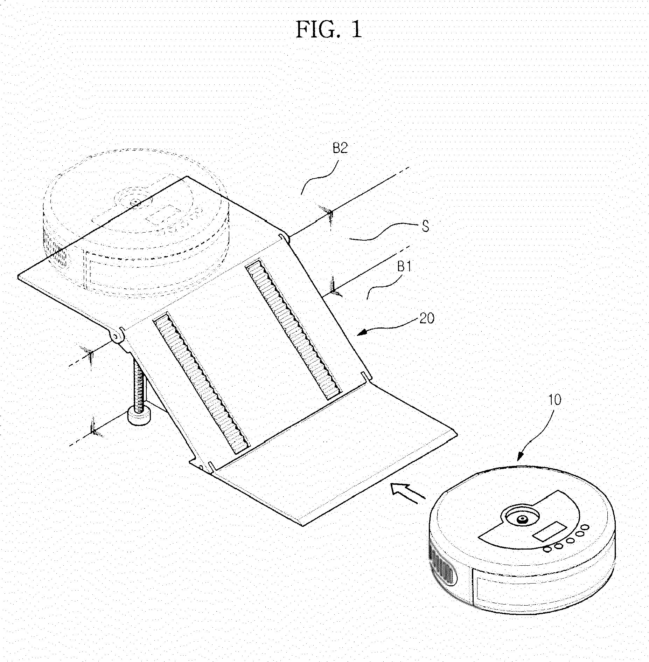

As shown in FIG. 1, the step climbing system for moving robots includes a moving robot 10, and a step climbing device 20 for moving robots disposed at a step S formed between a first bottom surface B1 and a second bottom surface B2, located at different heights and allowing the moving robot 10 to climb the step S, and thus, to move from one of the first bottom surface B1 and the second bottom surface B2 to the other of the first bottom surface B1 and the second bottom surface B2. In this embodiment, the second bottom surface B2 is located at a position higher than the first bottom surface B1.

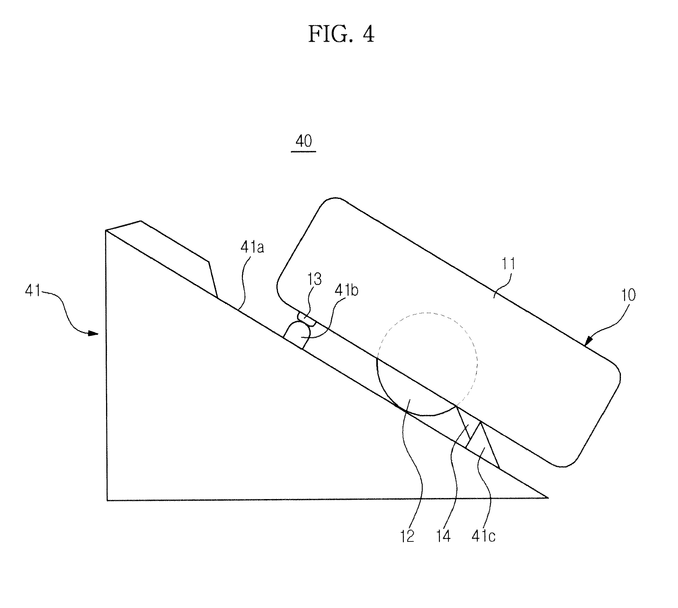

The moving robot 10, as shown in FIG. 4, includes a main body 11 and wheels 12 disposed on the lower portion of the main body 11 which allows the moving robot 10 to move.

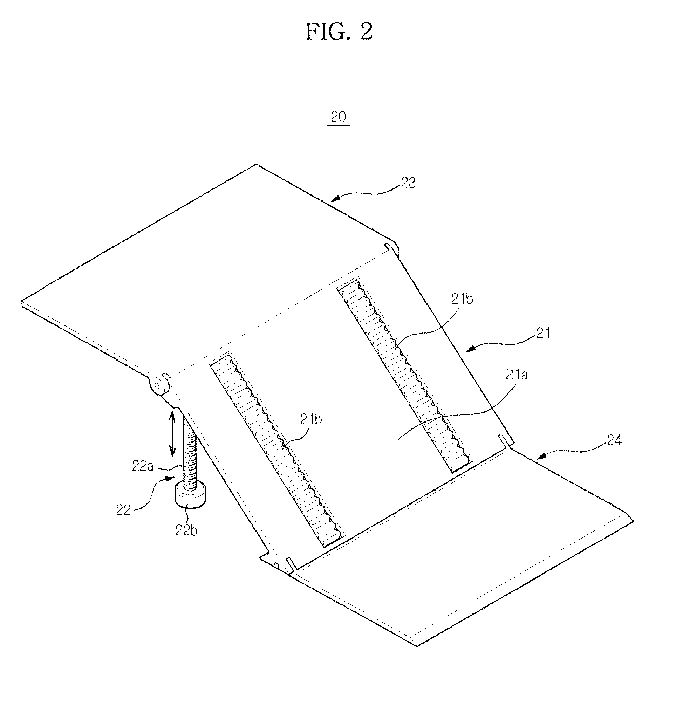

The step climbing device 20 for moving robots, as shown in FIG. 2, includes a climbing guide 21 provided with an inclined surface 21 a, height adjustment units 22 adjusting the height of the upper end of the climbing guide 21 to correspond to the step S on which the upper end of the climbing guide 21 will be installed, a first extension plate 23 extending from the upper end of the inclined surface 21 a of the climbing guide 21, and a second extension plate 24 extending from the lower end of the inclined surface 21 a of the climbing guide 21.

The climbing guide 21 is formed in a platy shape, and is inclined so that the upper surface of the climbing guide 21 forms the above-described inclined surface 21 a. Two rail parts 21 b are provided on the inclined surface 21 a at positions corresponding to the two wheels 12 of the moving robot 100 moving along the inclined surface 21 a, thereby preventing slippage of the wheels 12 of the moving robot 10 on the inclined surface 21 a. The rail parts 21 b are formed in a prominence and depression shape, in which the shape may alternate between prominence and depression, and serve to increase friction between the wheels 12 and the rail part 21 b.

The height adjustment unit 22 includes a screw 22a extending in the vertical direction so that the upper end thereof is installed at the upper end of the climbing guide 21, and a leg 22b rotatably installed at the lower end of the screw 22a and moving vertically within a designated range. Therefore, when the leg 22b is rotated to move vertically, the length of the height adjustment unit 22 is changed, and thereby the height of the upper end of the climbing guide 21 may be adjusted.

The first extension plate 23 and the second extension plate 24 cause the moving robot 10 to climb the step S deviating from the adjustable range of the height adjustment units 22 or plural steps S. The first extension plate 23 is rotatably installed at the upper end of the climbing guide 21, the second extension plate 24 is rotatably installed at the lower end of the climbing guide 21, and the upper surfaces of the first extension plate 23 and the second extension plate 24 are rotated to be located in a straight line with the inclined surface 21 a of the climbing guide 21 and thus the first extension plate 23 and the second extension plate 24 exhibit effects as if the inclined surface 21 a of the climbing guide 21 extends. In this example embodiment, the first extension plate 23 and the second extension plate 24 are formed of an elastically deformable material so as to elastically cope with the height of the step S, however, the present disclosure is not limited thereto.

Hereinafter, a step climbing device for moving robots in accordance with another embodiment of the present disclosure will be described.

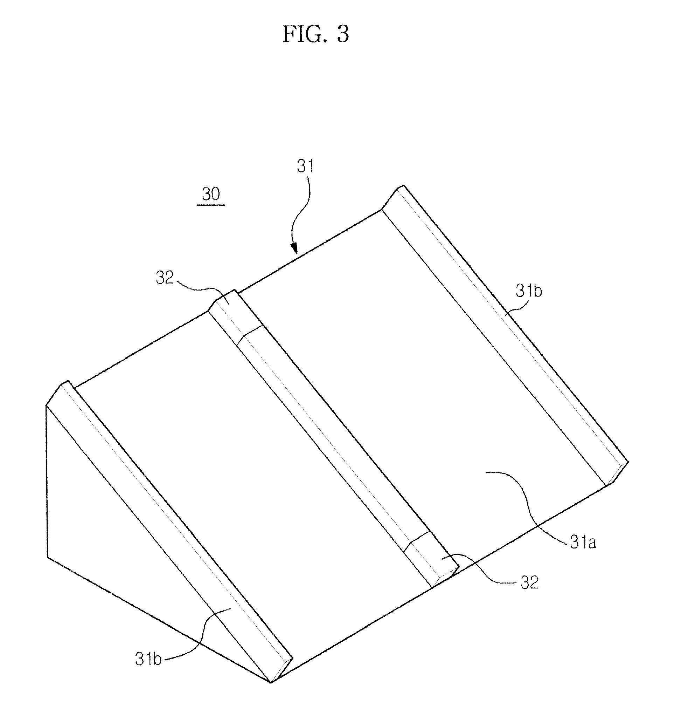

As shown in FIG. 3, the step climbing device 30 for moving robots in accordance with this example embodiment includes a climbing guide 31 provided with an inclined surface 31 a formed by the upper surface thereof, and two guide ribs 31 b provided at both sides of the climbing guide 31 and disposed at both sides of the wheels 12 of the moving robot 10 to guide the moving robot 10 along the inclined surface 31 a.

Further, the step climbing device 30 for moving robots in accordance with this embodiment includes guide units 32 allowing the moving robot 10 to recognize the position of the step climbing device 30 for moving robots.

Although they are not shown in the drawings, the guide unit 32 of the step climbing device 30 for moving robots includes a first communication unit for communication with the moving robot 10, and the moving robot 10 includes a second communication unit for communication with the first communication unit. In this embodiment, the first communication unit serves to transmit an optical or radio signal, and the second communication unit serves to receive the signal transmitted from the first communication unit.

Therefore, if the moving robot 10 needs to climbs a step S, the moving robot 10 receives the signal, transmitted from the first communication unit of the guide unit 32, via the second communication unit, included on the moving robot 10, to recognize the position of the step climbing device 30 for moving robots, moves to the step climbing device 30 for moving robots, and climbs the step S through the step climbing device 30 for moving robots to move from one of the first bottom surface B1 and the second bottom surface B2 to the other of the first bottom surface B1 and the second bottom surface B2. Further, the step climbing device 30 for moving robots including the guide units 32 may serve as a smart guide allowing the moving robot 10 to recognize the first bottom surface B1 and the second bottom surface B2 having different heights divided by the step S.

In this embodiment, the step climbing device 30 for moving robots includes two guide units 32 to allow the moving robot 10 to recognize the position of the step climbing device 30 for moving robots on both of the first bottom surface B1 and the second bottom surface B2 having different heights divided by the step S. The guide units 32 includes a first guide unit 32 installed at the lower end of the climbing guide 31 and a second guide unit 32 installed at the upper end of the climbing guide 31. Although FIG. 3 illustrates the guide units 32 disposed at the upper and lower end of the climbing guide 31, the present disclosure is not limited thereto.

A step climbing method of the moving robot 10 used for cleaning through the step climbing device 30 for moving robots having the above guide units 32 will be described below.

First, the moving robot 10 performs cleaning of the first bottom surface B1 while moving along the first bottom surface B1, and after cleaning of the first bottom surface B1 has been completed, confirms the position of the step climbing device 30 for moving robots through communication with the first communication unit provided on the guide unit 32 of the step climbing device 30 for moving robots through the second communication unit provided on the moving robot 10. When the position of the step climbing device 30 for moving robots is confirmed, the moving robot 10 moves to the step climbing device 30 for moving robots, moves along the inclined surface 31 a of the climbing guide 31, climbs the step S, and moves to the second bottom surface B2. Continuously, the moving robot 10 cleans the second bottom surface B2 while moving along the second bottom surface B2.

Hereinafter, a step climbing device for moving robots in accordance with a further embodiment of the present disclosure will be described.

As shown in FIG. 4, the step climbing device 40 for moving robots in accordance with this embodiment includes a climbing guide 41 provided with an inclined surface 41 a formed by the upper surface thereof.

A charging terminal 41 b is disposed on the inclined surface 41 a of the climbing guide 41 at a position corresponding to a charging unit 13 of the moving robot 10 under the condition that the moving robot 10 is disposed on the inclined surface 41 a so as to charge the moving robot 10, and thus, the step climbing device 41 for moving robots may serve as a charging station to charge the moving robot 10. That is, when the moving robot 10 is located at a designated position of the inclined surface 41 a, the charging unit 13 of the moving robot 10 is connected to the charging terminal 41 b, and thus, the step climbing device 40 for moving robots may be used to charge the moving robot 10.

In order to maintain a state in which the charging unit 13 of the moving robot 10 is connected to the charging terminal 41 b, a support protrusion 14 protrudes from the lower surface of the moving robot 10, and a fixing protrusion 41c to fix the support protrusion 14 is formed on the inclined surface 41 a of the climbing guide 41.

In this embodiment, the fixing protrusion 41 c is installed so as to be vertically movable or adjustable, and may thus selectively protrude from the inclined surface 41a. That is, the fixing protrusion 41c is disposed at the inside of the climbing guide 41 when the moving robot 10 moves along the inclined surface 41a, and protrudes from the inclined surface 41a of the climbing guide 41 to support the moving robot 10 through the support protrusion 14 only if charging of the moving robot 10 is carried out and if it is necessary to maintain the disposed state of the moving robot 10 on the inclined surface 41 a.

Although this embodiment exemplarily illustrates the charging terminal 41 b provided on the inclined surface 41 a as charging the moving robot 10 under the condition that the moving robot 10 is located on the inclined surface 41 a, the position of the charging terminal 41 b of the step climbing device 40 for moving robots may be changed to the upward or downward area so that the charging terminal 41 b is connected to the charging unit 13 of the moving robot 10 to charge the moving robot 10 under the condition that the moving robot 10 is located on the first bottom surface B1 or the second bottom surface B2.

As is apparent from the above description, a step climbing device for moving robots in accordance with an example embodiment of the present disclosure allows a moving robot to climb a step through an inclined surface provided on the step climbing device for moving robots.

Further, the step climbing device for moving robots includes a charging terminal, and may thus serve as a charging station of the moving robot.

Moreover, the step climbing device for moving robots includes guide units, and may thus serve as a smart guide.

Although a few embodiments of the present disclosure have been shown and described, it would be appreciated by those skilled in the art that changes may be made in these embodiments without departing from the principles and spirit of the disclosure, the scope of which is defined in the claims and their equivalents.

## Claims

1. A step climbing device for moving robots which is disposed at a step formed between a first bottom surface and a second bottom surface located at different heights from each other, comprising:
a climbing guide including an inclined surface formed on the upper surface thereof and allowing a moving robot to climb the step to move from one of the first bottom surface and the second bottom surface to the other one of the first bottom surface and the second bottom surface.

2. The step climbing device for moving robots according to claim 1, wherein rail parts are provided on the inclined surface at positions corresponding to moving paths of wheels of the moving robot moving along the climbing guide, so as to reduce slippage of the wheels of the moving robot on the inclined surface.

3. The step climbing device for moving robots according to claim 1, wherein the rail parts include prominences and depressions.

4. The step climbing device for moving robots according to claim 1, further comprising height adjustment units connected to the upper end of the climbing guide to adjust the height of the upper end of the climbing guide corresponding to the step.

5. The step climbing device for moving robots according to claim 4, wherein each of the height adjustment units includes:
a screw extending vertically and connected to the upper end of the climbing guide; and
a leg rotatably installed at the lower end of the screw and moving vertically.

6. The step climbing device for moving robots according to claim 1, further comprising:
a first extension plate rotatably installed at the upper end of the climbing guide; and
a second extension plate rotatably installed at the lower end of the climbing guide.

7. The step climbing device for moving robots according to claim 5, wherein the first extension plate and the second extension plate are formed of an elastically deformable material.

8. The step climbing device for moving robots according to claim 1, further comprising guide units generating a signal to guide the moving robot.

9. The step climbing device for moving robots according to claim 8, wherein the guide units include:
a first guide unit disposed at the lower end of the climbing guide; and
a second guide unit disposed at the upper end of the climbing guide.

10. The step climbing device for moving robots according to claim 1, further comprising two guide ribs provided at both sides of the inclined surface to guide the moving robot along the inclined surface.

11. The step climbing device for moving robots according to claim 1, further comprising a charging terminal connected to a charging unit provided on the moving robot to charge the moving robot.

12. The step climbing device for moving robots according to claim 11, wherein the charging terminal protrudes from the inclined surface and is connected to the charging unit, under the condition that the moving robot is located on the inclined surface.

13. The step climbing device for moving robots according to claim 12, further comprising a fixing protrusion disposed on the inclined surface to fix a support protrusion protruding from the moving robot, under the condition that the charging terminal is connected to the charging unit.

14. The step climbing device for moving robots according to claim 13, wherein the fixing protrusion selectively protrudes from the inclined surface.

15. The step climbing device for moving robots according to claim 11, wherein the charging terminal is connected to the charging unit of the moving robot, under the condition that the moving robot is located on one of the first bottom surface and the second bottom surface.
